(19) Europäisches Patentamt / European Patent Office / Office européen des brevets

(11) **EP 2 036 604 A1**

(12) **DEMANDE DE BREVET EUROPEEN**

(43) Date de publication:
**18.03.2009 Bulletin 2009/12**

(51) Int Cl.:
***B01J 19/00*** *(2006.01)*      ***B01L 3/02*** *(2006.01)*

(21) Numéro de dépôt: **08105279.7**

(22) Date de dépôt: **09.09.2008**

(84) Etats contractants désignés:
**AT BE BG CH CY CZ DE DK EE ES FI FR GB GR HR HU IE IS IT LI LT LU LV MC MT NL NO PL PT RO SE SI SK TR**
Etats d'extension désignés:
**AL BA MK RS**

(30) Priorité: **13.09.2007 FR 0757543**

(71) Demandeurs:
- **INNOPSYS**
  **31390 Carbonne (FR)**
- **Centre National de la Recherche Scientifique Etablissement Public à Caractère Scientifique, Culturel et Professionnel**
  **75794 Paris Cedex 16 (FR)**

(72) Inventeurs:
- **Cau, Jean-Christophe**
  **31400, Toulouse (FR)**

- **Lalo, Hélène**
  **31000, Toulouse (FR)**
- **Peyrade, Jean-Pierre**
  **31520, Ramonville Saint Agne (FR)**
- **Vieu, Christophe**
  **31320, Auzeville (FR)**
- **Thibault, Christophe**
  **31400, Toulouse (FR)**
- **Severac, Childerick**
  **31000, Toulouse (FR)**

(74) Mandataire: **Schmit, Christian Norbert Marie**
**Schmit Chretien Schihin**
**111, Cours du Médoc**
**CS 40009**
**33070 Bordeaux Cedex (FR)**

(54) **Procédé de dépôt simultané d'un ensemble de motifs sur un substrat par un macro timbre**

(57) L'invention concerne un timbre (1) pour le dépôt de matériels sous forme d'impressions sur une surface d'un substrat. Le timbre (1) comporte une semelle (12) et des plots (14) solidaires à une extrémité (142) à une première face (121) de la semelle. Les plots sont agencés sur la première face (121) de la semelle (12) de telle sorte que les faces (141) de tous les plots (14) solidaires de la semelle (12) puissent être mis en contact quasi simultanément sur la surface du substrat.

L'invention est également relative à un procédé de réalisation dudit timbre et à un procédé de dépôt quasi simultané d'un grand nombre d'impressions de matériels identiques ou non sur la surface du substrat au moyen du timbre (1), en vue d'une analyse.

Fig. 1

## Description

L'invention est relative au dépôt de matériels biologiques sous forme d'impressions sur un substrat en vue d'une analyse. Plus particulièrement, l'invention concerne un timbre, un procédé de réalisation dudit timbre et un procédé de dépôt pour le transfert quasi simultané d'un grand nombre d'impressions de matériels biologiques identiques ou différents, en particulier d'impressions pour lesquelles les matériels biologiques sont déposés, suivant un agencement déterminé.

Afin de déposer sur un substrat des molécules pour une analyse suivant des motifs prédéfinis, il est connu de mettre en oeuvre un procédé de transfert par micro contact. Le transfert par micro contact est réalisé le plus souvent au moyen d'un timbre de dimensions adaptées, dit micro timbre, reproduisant les motifs devant être réalisés avec la molécule. Ainsi, dans le cas de micro timbres de dimensions millimétriques, les motifs reproduits sont réalisés à l'échelle nanométrique.

Une solution contenant la molécule est dans un premier temps déposée sur le micro timbre puis est transférée sur le substrat par contact direct avec le substrat. Lors du transfert de la molécule sur le substrat, celle-ci reproduit les motifs présents sur le micro timbre, en positif ou en négatif, suivant les technologies mises en oeuvre. Cette solution est par exemple décrite dans le brevet US 5512131.

Afin de réaliser des analyses d'un grand nombre de molécules dans un minimum de temps, il est le plus souvent utilisé des dispositifs d'analyse, tels que par exemple des scanners, aptes à balayer le substrat à la surface duquel ont été déposés un grand nombre de motifs, de dimensions nanométriques, correspondant chacun à une molécule, suivant des agencements en général réguliers, tels que par exemple sous la forme de matrices de lignes et de colonnes.

Lorsque l'on veut déposer un grand nombre de molécules différentes sur une surface du substrat, l'opération de transfert par micro contact est répétée autant de fois que nécessaire. Des opérations intermédiaires de nettoyage des micro timbres sont nécessaires lorsque lesdits micro timbres sont utilisés pour déposer différentes molécules.

Cette solution s'avère donc contraignante et coûteuse en temps.

La présente invention se propose de résoudre ces difficultés au moyen d'un timbre pour le dépôt de matériels sur une surface d'un substrat, lesdits matériels déposés pouvant être identiques ou non. Ledit timbre, dit macro timbre comporte :

- une semelle, comportant une première face, dite face inférieure,
- des plots solidaires de la semelle, chaque plot comportant :

  - un axe sensiblement perpendiculaire à la face inférieure de la semelle,
  - une première extrémité solidaire avec la face inférieure de la semelle,
  - une seconde extrémité, dite extrémité libre, opposée à ladite première extrémité suivant l'axe, ladite extrémité libre présentant une face, sensiblement plane et parallèle localement à un plan tangent à la face inférieure de la semelle, apte à retenir une solution incorporant des matériels à déposer,

lesdits plots étant agencés sur la face inférieure de la semelle de telle sorte que les faces de tous les plots solidaires de la semelle puissent être mis en contact quasi simultanément sur la surface du substrat.

Avantageusement, pour obtenir un bon compromis entre les risques de pollution entre les plots et la qualité desdits plots, les plots du macro timbre sont dimensionnés de sorte qu'un $\dfrac{l}{d}$ rapport soit compris entre 1 et 2, de préférence sensiblement égal à 1,5, où :

- **l** représente une longueur du plot, entre la face de la semelle et la face de l'extrémité libre dudit plot, et
- **d** représente une dimension caractéristique de la section desdits plots, dans un plan perpendiculaire au sens de la longueur **l.**

Avantageusement, pour obtenir un compromis entre les risques de pollution entre les plots et la densité desdits plots, les plots du macro timbre sont dimensionnés et agencés de sorte que des $\dfrac{d}{p}$ rapports et $\dfrac{d}{q}$ soient compris entre 0,1 et 0,8, où p représente un pas entre les plots suivant une ligne et q un pas entre les plots suivant une colonne.

Dans un mode de réalisation, la semelle et les plots sont constitués par au moins un matériau durcissable, de type thermoplastique ou élastomère, tel que par exemple un polydiméthylsiloxane (PDMS) ou, un polyméthylméthacrylate (PMMA).

Dans un exemple de réalisation, un matériau durcissable est un mélange d'au moins deux polymères différents aptes à donner des propriétés mécaniques et physiques spécifiques au macro timbre.

De préférence, au moins une face des extrémités libres des plots comporte au moins un motif correspondant au motif sous la forme duquel un matériel doit être déposé sur le substrat.

De préférence, le motif peut être une surface uniforme, dite spot, une figure géométrique périodique, une figure géométrique complexe apte à diffracter la lumière, ou une combinaison de tels motifs, et peut présenter des dimensions nanométriques.

Dans un mode de réalisation, les plots sont agencés sur la semelle de sorte que chaque plot corresponde à un agencement de puits d'une plaque à puits, pour permettre l'emboîtement simultané des plots dans des puits.

L'invention est également relative à un procédé de réalisation du macro timbre qui comporte les étapes de :

- positionnement d'un moule sur une face d'une lame, ledit moule comportant des évidements traversants reproduisant en dimensions et en agencement une forme en creux correspondant aux dimensions et agencement des plots du macro timbre, lesdits évidements débouchant chacun par une ouverture sur une face inférieure du moule, ledit positionnement étant réalisé de sorte que ladite face inférieure dudit moule est en contact avec la face de la lame,
- remplissage des évidements du moule avec au moins un matériau durcissable constituant après durcissement le macro timbre,
- extraction du macro timbre du moule.

De préférence, une pression répartie est exercée, suffisante pour éviter un écoulement du au moins un matériau durcissable entre le moule et la lame lors de l'étape de remplissage des emplacements dudit moule.

Lors de la mise en oeuvre du procédé, le remplissage des évidements du moule avec le au moins un matériau durcissable est réalisé au niveau d'ouvertures de chaque évidement débouchant sur une face supérieure du moule, opposée à la face inférieure.

De préférence, au moins un matériau durcissable est coulé sur la face supérieure du moule, entre des rebords extérieurs, pour former tout ou partie de la semelle du macro timbre.

Le matériau utilisé pour réaliser le moule est sélectionné dans une famille de matériau à laquelle le au moins un matériau durcissable du macro timbre n'adhère pas tel que par exemple un polymère de tétrafluoroéthylène ou un polyuréthane.

Avantageusement, les évidements du moule sont réalisés avec une forme adaptée au démoulage du au moins un matériau constituant le macro timbre.

Dans un mode particulier de réalisation, le procédé comporte une étape préalable de réalisation de motifs, dit motifs négatifs, sur la face de la lame, de sorte que les motifs négatifs représentent, en négatif, des motifs devant être réalisés sur les plots du macro timbre. Avantageusement, le moule est positionné sur la face de la lame de sorte que chaque ouverture des évidements dudit moule entoure un motif négatif.

L'invention est aussi relative à un procédé de dépôt quasi simultané de matériaux sur une surface d'un substrat au moyen du macro timbre, les matériels déposés pouvant être différents ou non. Le procédé de dépôt comporte les étapes de :

- dépôt de solutions comportant les différents matériels sur les faces des plots du macro timbre,
- séchage partiel des solutions déposées,
- application momentanée du macro timbre sur la surface du substrat de telle sorte que les matériels se déposent quasi simultanément sur la surface du substrat en reproduisant la forme des impressions des faces des différents plots.

Dans une forme de mise en oeuvre du procédé, le dépôt des solutions est réalisé par trempage des plots du macro timbre dans des puits d'une plaque à puits.

Avantageusement, un puits de la plaque à puits, de profondeur H, est rempli avec un niveau n de remplissage de sorte que $H - l < n < H - l \dfrac{S_{plot}}{S_{puits}}$, où $S_{plot}$ détermine une aire du plot, et $S_{puits}$ une aire du puits.

Avantageusement, un même macro timbre peut être appliqué plusieurs fois pour déposer des matériels sur une surface d'au moins un substrat.

La description détaillée de l'invention est faite en référence aux figures qui représentent :

**Figure 1,** une vue en perspective d'un macro timbre suivant l'invention,
**Figure 2,** une vue de dessous d'un macro timbre suivant l'invention,
**Figure 3,** une coupe transversale d'un macro timbre suivant l'invention,

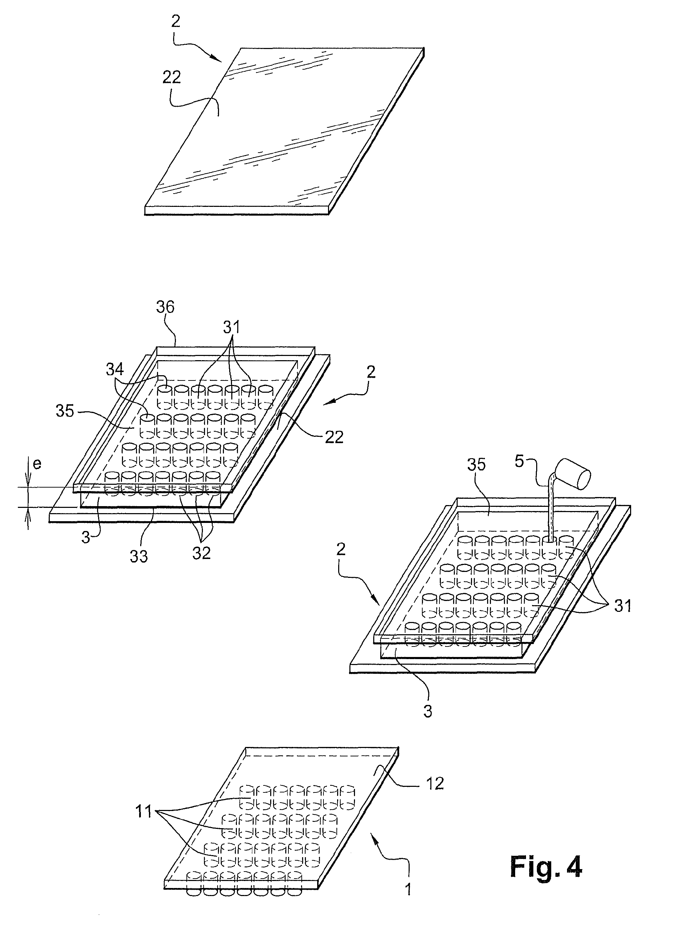

**Figure 4,** une illustration des différentes étapes du procédé,
**Figure 5,** une illustration de différents motifs lors de l'étape supplémentaire de réalisation de motifs dits inversés,
**Figure 6,** une vue en perspective d'un macro timbre illustrant un agencement de plots suivant un agencement des puits d'une plaque à puits.

Un macro timbre, pour le dépôt quasi simultané de plusieurs matériels sur un substrat, suivant l'invention se définit comme un ensemble d'éléments indissociables assimilables à des micro timbres, les dimensions du macro timbre étant alors d'au moins un ordre de grandeur supérieur aux dimensions des micro timbres considérés. Ainsi dans le cas de micro timbres de dimensions millimétriques, le macro timbre est de dimensions centimétriques.

La présente invention est décrite dans le cas de dépôt de matériels sur un substrat. Les matériels sont par exemple :

- des matériels biologiques tels que des cellules et des microorganismes tels que des bactéries,
- des matériels chimiques ou biochimiques tels que des molécules, par exemple des silanes, des biomolécules, telles que des oligonucléotides, de l'acide désoxyribonucléique (ADN), des plasmides, des protéines, des anticorps, des oligosaccharides, des polysaccharides.

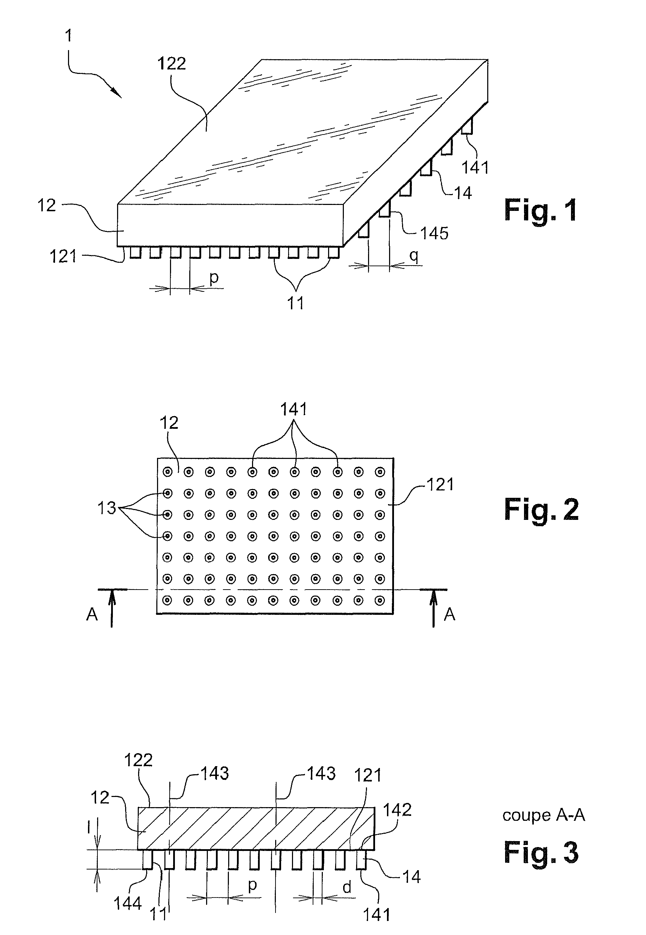

Le macro timbre 1, comme illustré sur les figures 1 à 3, comporte une semelle 12 et un ensemble de micro timbres 11. De préférence, les micro timbres 11 sont agencés suivant une disposition régulière, par exemple suivant une matrice de lignes et colonnes, telle que celle généralement rencontrée pour l'agencement des puits d'une plaque à puits.

Chaque micro timbre est réalisé sous la forme d'un plot 14, de forme allongée, dont une des extrémités 142 est solidaire d'une face 121 de la semelle 12 et dont l'autre extrémité, dite extrémité libre 144, du coté opposé à la face 121 de la semelle 12, présente une face 141 sensiblement plane et sensiblement parallèle à la face 121 de la semelle 12. Avantageusement, la face 141 comporte un motif 13, en relief ou en creux correspondant au motif sous la forme duquel un matériel doit être déposé.

Avantageusement, les faces 141 de l'ensemble des micro timbres 11 sont situées dans un même plan, sensiblement parallèle à la face 121 de la semelle 12.

Dans un autre mode de réalisation, chaque face 141 de plot est sensiblement plane et parallèle localement à un plan tangent à la face inférieure 121 de la semelle 12.

Les plots 14, d'axe 143, sont espacés entre eux sur une ligne d'un pas p ou sur une colonne d'un pas q, présentent, entre la face 121 de la semelle 12 et la face 141 de l'extrémité libre 144 dudit plot, une longueur **l,** et ont, dans un plan perpendiculaire au sens de la longueur, une dimension d, caractéristique de la section desdits plots.

Avantageusement, les pas **p** et **q** entre les plots sont sensiblement identiques.

Avantageusement, les plots ont une forme cylindrique ou une forme conique avec une grande base du cône cylindrique solidaire de la face 121 de la semelle 12. De préférence, des plots cylindriques sont de section circulaire de diamètre **d,** et des plots coniques sont de section circulaire de diamètre **d,** au niveau de la section moyenne des plots.

Avantageusement, les plots sont dimensionnés de sorte qu'un rapport $\dfrac{l}{d}$ soit compris entre 1 et 2, de préférence sensiblement de l'ordre de 1,5. Le rapport $\dfrac{l}{d}$ constitue un compromis entre les risques de pollution de la solution déposée sur un micro timbre par la solution d'un micro timbre voisin et la qualité des plots. Si les plots sont longs et fins, le risque de pollution par migration est atténué, mais la réalisation des plots sera plus difficile et les plots risquent de ne pas être assez rigides pour déposer les matériels aux emplacements souhaités sans mélanger les solutions de différents micro timbres. Si les plots sont courts et épais, leur rigidité sera satisfaisante mais le risque de pollution par migration sera élevé sauf si les plots sont plus espacés.

Avantageusement, les plots sont dimensionnés et agencés de sorte que des rapports $\dfrac{d}{p}$ et $\dfrac{d}{q}$ soient compris entre 0,1 et 0,8. Le rapport $\dfrac{d}{p}$, respectivement $\dfrac{d}{q}$, constitue un compromis entre les risques de pollution, par exemple par migration, qu'elle soit moléculaire ou par capillarité, et la densité des plots. Plus les plots sont espacés, plus le risque de pollution est atténué, mais en contre partie la densité de plots diminue ce qui va à l'encontre de la recherche d'une grande densité d'échantillons à déposer sur un substrat.

Avantageusement, chaque micro timbre 11 comporte sur sa face 141, soit un motif unique 13, tel que par exemple une surface uniforme, dite spot, une figure géométrique périodique telle qu'un réseau 1 D ou 2D, par exemple un réseau de lignes ou une grille, ou une figure géométrique complexe apte à diffracter la lumière, soit plusieurs motifs identiques 13, tels que par exemple plusieurs spots ou plusieurs figures géométriques périodiques ou complexes aptes à diffracter la lumière. Dans le cas d'un micro timbre de dimensions millimétriques, le motif est de dimensions submillimétriques ou nanométriques.

Dans un exemple de réalisation d'un macrotimbre, le macrotimbre est réalisé de sorte que les plots sont agencés suivant un agencement de puits d'une plaque à puits standard de 1536 puits. La plaque à puits standard 1536 puits présente une période entre deux puits, suivant les lignes et les colonnes, de sensiblement 2.25 mm, une section de puits comprise entre 1.3 mm et 1.8 mm, et une profondeur de puits comprise entre 4 et 5 mm. Le macrotimbre, de dimension centimétrique, comprend un ensemble de plots, de dimensions millimétriques, de section circulaire, espacés entre eux sur une ligne d'un pas p sensiblement de 2.25 mm sur une colonne d'un pas q sensiblement de 2.25 mm. Les plots présentent une longueur l comprise entre 1 mm et 2 mm, de préférence 1.5 mm, et une dimension d comprise entre 0.5 mm et 1.2 mm, de préférence 1 mm.

Le macro timbre 1 de l'invention est avantageusement réalisé par une opération de moulage dans un moule 3 sans fond préalablement fixé sur une face 22 d'une lame rigide 2.

Dans une première étape du procédé, le moule 3 est mis en place sur la face 22 de la lame 2.

Le moule 3 comporte une face inférieure 33, qui, de part la forme et le matériau du moule et par des moyens de maintien (non représentés) sur la face 22 de la lame 2, est telle que ladite face inférieure 33 soit en contact aussi intime que possible avec la face 22 de la lame 2.

Le moule 3 utilisé pour la mise en oeuvre du procédé comporte une empreinte reproduisant en creux le volume du macro timbre. Ainsi le moule 3 comporte des évidements 31 correspondant aux plots 14 du macro timbre. Chaque évidement, traversant le moule 3 entre la face inférieure 33 et une face opposée à la face inférieure 33, dite face supérieure 35, a une forme en creux ayant les contours d'une surface extérieure 145 d'un plot 14.

De préférence, les évidements 31 sont disposés de sorte à être sensiblement conformes à l'agencement des puits d'une plaque à puits. Lesdits évidements sont espacés entre eux du pas **p** suivant des lignes et **q** suivant des colonnes.

Les évidements 31 dans le moule 3 débouchent de part et d'autre dudit moule par des ouvertures 34 sur la face supérieure 35, opposée à la face inférieure 33 du moule et par des ouvertures 32 sur la face inférieure 33 du moule, c'est à dire la face en contact avec la face 22 de la lame 2 lorsque le moule 3 est en place.

Le moule 3 présente une épaisseur **e** au niveau des évidements 31 sensiblement égale à la longueur **l** désirée des plots 14 du macro timbre 1.

Avantageusement, le moule 3 comporte des rebords extérieurs 36 qui déterminent tout ou partie d'une épaisseur de la semelle 12 du macro timbre 1.

Afin de permettre le démoulage ultérieur des plots 14 réalisés par le procédé du macro timbre 1, le moule 3 est avantageusement réalisé dans une matière non adhésive, telle que le téflon® ou le polyuréthane.

Les évidements 31 dans le moule 3 peuvent être réalisés par tout procédé d'usinage adapté au matériau utilisé pour réaliser le moule.

Avantageusement, la forme des évidements 31 du moule, correspondant à la forme en creux des plots 14 du macro timbre 1, est réalisée de sorte que les plots soient facilement démoulables. Dans un exemple de forme, les évidements sont cylindriques ou coniques avec une grande base du cône située du coté de la face supérieure 34 du moule 3.

Pendant la mise en oeuvre de la première étape du procédé, il est important que le contact obtenu entre le moule 3 et la face 22 de la lame 2 soit suffisant pour obtenir une étanchéité telle qu'un matériau reste contenu dans les évidements 31 pendant une opération ultérieure de remplissage du moule 3 et ne risque pas de s'écouler entre le moule 3 et la face 22 de la lame 2.

L'étanchéité entre le moule 3 et la face 22 de la lame 2 est obtenue par exemple en appliquant une pression sur le moule 3.

Un moyen, par exemple, pour exercer cette pression, consiste à placer des moyens d'appui (non représentés) prenant appui sur les rebords 36 du moule 3 et en un ou plusieurs points d'une zone centrale dudit moule, par exemple en des points réalisés sans évidements pour des plots afin d'y réserver des zones d'application d'effort de mise en pression.

Dans une deuxième étape du procédé, un, deux ou plusieurs matériaux durcissables 5 sont coulés séparément dans le moule, ledit ou lesdits matériaux durcissables 5 ainsi moulés constituant le macro timbre 1. Par matériau durcissable, on entend un matériau passant d'un état liquide, relativement fluide, à un état solide, le changement d'état dudit matériau étant réalisé par exemple par polymérisation ou réticulation.

Dans un premier exemple de réalisation, un matériau durcissable 5 est un polymère.

Dans un second exemple de réalisation, un matériau durcissable 5 est un mélange d'au moins deux polymères différents, apte à donner des propriétés physiques et mécaniques spécifiques au macro timbre.

Pour réaliser cette deuxième étape, le au moins un matériau durcissable 5 est coulé au niveau de la face supérieure 35 du moule 3 en remplissant les évidements 31, ainsi qu'un volume continu au dessus des évidements 31, délimitée par les rebords 36 du moule 3, ledit volume formant la semelle 12 du macro timbre 1.

Dans un mode de réalisation, lorsque deux ou plusieurs matériaux sont coulés, lesdits au moins deux matériaux sont coulés successivement, avantageusement après un durcissement au moins partiel du matériau précédemment coulé.

Par exemple, un premier matériau est coulé dans le moule pour constituer les plots puis un second matériau, de préférence plus rigide, est coulé, après durcissement du premier matériau, pour constituer la semelle.

Le moule 3 est maintenu en position sur la lame jusqu'au durcissement du au moins un matériau durcissable 5 remplissant le moule 3.

Le au moins un matériau durcissable 5 doit présenter des caractéristiques adaptées à la réalisation du macro timbre telles qu'être suffisamment fluide, dans un premier état, pour remplir les évidements du moule 3 pendant l'opération de coulée, et être suffisamment dur, dans un second état, tout en conservant une consistance élastomérique pour les micro timbres.

Avantageusement, le au moins un matériau durcissable 5 est choisi dans un matériau, de type thermoplastique ou élastomérique, apte à reproduire la forme des évidements 31, tel que par exemple le polydiméthylsiloxane (PDMS) ou le polyméthylméthacrylate (PMMA).

Dans une troisième étape du procédé, après le durcissement du au moins un matériau durcissable 5, ledit au moins un matériau durcissable est extrait du moule 3 et le macro timbre 1 ainsi réalisé est libéré.

Dans un mode de mise en oeuvre de cette troisième étape, le moule 3 étant réalisé de sorte que la forme des évidements dudit moule soit démoulable, le macro timbre 1 est extrait en tirant par exemple au niveau des extrémités de la semelle 12.

Dans un autre mode de mise en oeuvre de cette troisième étape, le macro timbre 1 est extrait du moule 3 au moyen d'un moyen de préhension. Un moyen, par exemple, consiste à insérer une partie d'un moyen de préhension (non représenté) dans le au moins un matériau durcissable 5 constituant la semelle 12, au niveau d'une face supérieure 122, opposée à la face 121, après la coulée dudit au moins un matériau durcissable dans le moule 3 et avant le durcissement dudit au moins un matériau durcissable.

Avantageusement, les moyens de préhension permettent de manipuler plus aisément le macro timbre 1 réalisé, lors de son application sur le substrat.

Par le choix des matériaux utilisés et la forme du macro timbre, l'opération de démoulage permet de n'endommager ni le macro timbre, ni le moule 3 ni la lame 2 qui sont réutilisables pour l'application du même procédé pour la réalisation de nouveaux macro timbres.

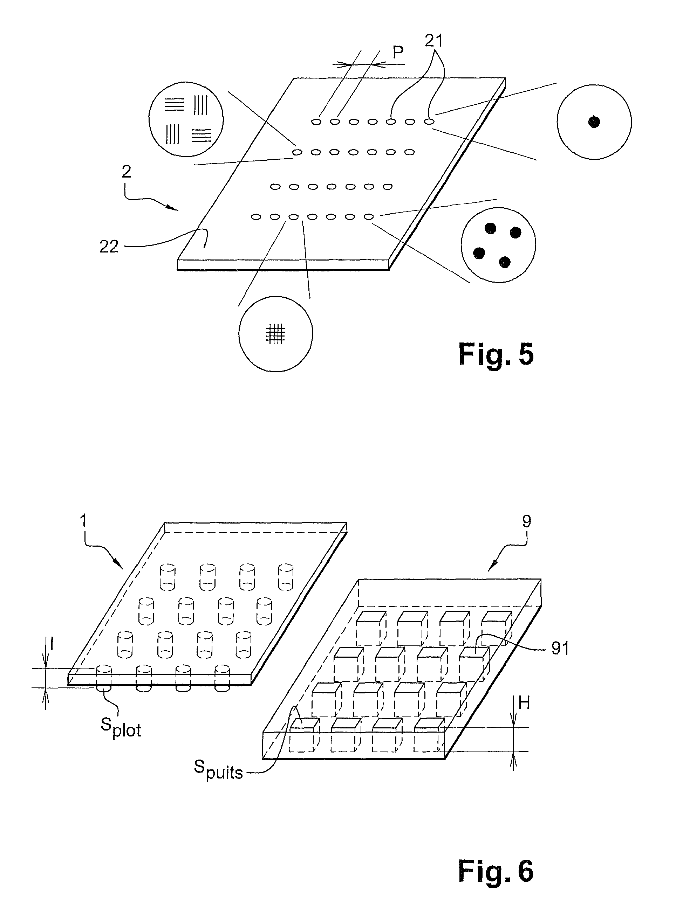

Dans un mode particulier de réalisation, le procédé comporte une étape supplémentaire, préalable à l'étape de mise en place du moule 3 sur la face 22 de la lame 2, de réalisation de motifs, dits motifs négatifs 21, sur la face 22 de la lame 2, comme illustré sur la figure 5.

Les motifs 21 à reproduire sur chaque face 141 de l'extrémité libre 144 des plots 14 doivent être réalisés sur la face 22 de la lame 2 aux emplacements de chaque plot.

De préférence, la lame 2 est une plaque rigide, par exemple, une lame en silicium.

Avantageusement, les motifs 21 représentent, en négatif, des motifs 13 qui doivent être réalisés sur la face 141 de l'extrémité libre 144 des plots 14 et sont réalisés par :

- lithographie, telle que par exemple la photolithographie ou la lithographie électronique,
- transfert de motifs lithographiés par gravure,
- gravure ionique réactive,
- gravure chimique.

Lorsque le moule est mis en place sur la face 22 de la lame 2, le moule 3 est alors positionné sur la face 22 de ladite lame de telle sorte que chaque ouverture 32, de part ses dimensions sensiblement supérieures à celles d'un motif négatif 21, entoure un motif négatif 21 de la lame 2.

Les étapes du procédé décrit et les moyens pour la mise en oeuvre des étapes du procédé permettent de réaliser un macro timbre 1 pour le dépôt quasi simultané d'un grand nombre d'impressions sur un substrat, lesdites impressions comportant les matériels à analyser.

Avantageusement, une première étape consiste à déposer les solutions comportant les différents matériels à analyser sur les faces 141 des micro timbres 11 du macro timbre 1.

Dans un mode de mise en oeuvre de cette étape, le dépôt des solutions sur les micro timbres est réalisé au moyen d'une plaque à puits.

Dans une première phase, la plaque à puits est préparée. Chaque puits de la plaque à puits est rempli avec des solutions différentes contenant des matériels différents à analyser.

Dans une seconde phase, une opération de trempage quasi simultanée des micro timbres dans les puits est réalisé, de sorte que les matériels se déposent sur les faces 141 des micro timbres 11, lesdites faces comportant ou non un motif 13.

De préférence, les pas p et q entre les micro timbres sont sensiblement égaux aux pas, suivant une ligne et suivant une colonne, entre les puits des plaques à puits. Afin de créer un jeu suffisant pour permettre une insertion facilitée des micro timbres dans leur puits, la dimension **d** d'un micro timbre est telle qu'elle est inférieure à une largeur du puits.

Pour éviter tout risque de débordement d'une solution d'un puits dans un autre puits, et donc de contamination, pendant ladite opération de trempage, le volume du plot 14 est de préférence inférieur au volume du puits et un niveau n de remplissage du puits est déterminé en fonction du volume du plot par rapport au volume du puits de sorte que si le niveau n de remplissage est trop faible, la face 141 plot 14 ne trempe pas dans ladite solution, et si il est trop élevé, la solution déborde.

Ainsi lorsque le volume d'un plot 14 est défini par sa longueur **l** et une aire $S_{plot}$, et que le volume d'un puits 91 d'une plaque à puits 9 est défini par une profondeur H et une aire $S_{puits}$, comme illustré sur la figure 6, le puits est rempli avec le niveau n de telle sorte que :

$$H - l < n < H - l \frac{S_{plot}}{S_{puits}} .$$

Dans une deuxième étape, une opération de séchage partiel des solutions comportant les matériels est réalisée pour atteindre une viscosité voulue des solutions pour les dépôts ultérieurs. La durée du séchage partiel est fonction de la solution utilisée.

Dans un mode de mise en oeuvre de cette étape, l'opération de séchage partiel est réalisée à l'air libre.

Dans un autre mode de mise en oeuvre de cette étape, pour accélérer le séchage des solutions, l'opération de séchage partiel est réalisée au moyen d'un soufflage modéré sur les faces 141 des plots 11 du macro timbre.

La substance de soufflage peut être par exemple un gaz inerte, tel que de l'azote.

Dans une troisième étape, le macro timbre 1 est appliqué momentanément sur la surface du substrat. Lors de l'application du macro timbre, les matériels sont transférés, sur le substrat, en reproduisant la forme des impressions de la face 141 des différents micro timbres 11.

Le substrat, par exemple une lame de verre, peut alors être utilisé pour analyser les matériels, par exemple au moyen d'un scanner spécifique, qui va balayer la surface du substrat et enregistrer la réponse de chaque zone comportant des matériels à des stimulis.

Lorsque les micro timbres 11 comportent un motif 13 sur chaque face 141, les matériels se déposent sur les motifs des micro timbres puis sont transférées sur la surface du substrat en reproduisant les motifs 13 présents sur les micro timbres.

Lorsque les micro timbres 11 comportent sur leurs faces 141 plusieurs motifs 13 identiques, l'analyse des matériels déposés sous la forme de ces motifs à la surface du substrat permet d'obtenir une redondance des mesures et de disposer des résultats de meilleures fiabilités statistiques.

Il est possible d'utiliser le macro timbre plusieurs fois pour déposer plusieurs séries de motifs sur différents substrats ou sur le même substrat afin d'augmenter le nombre de motifs déposés. Lors de ces utilisations multiples, la solution à imprimer peut être la même ou différente. Dans ce dernier cas, une opération de nettoyage du macro timbre est nécessaire entre deux utilisations.

Lorsque le macro timbre n'est pas réutilisable, par exemple en raison de plusieurs utilisations ayant conduit à un endommagement du macro timbre ou des motifs à reproduire, le macro timbre est remplacé sans surcoût significatif en raison de la possibilité de réutiliser le moule et la lame pour réaliser un nouveau timbre.

Dans un exemple d'application, le macro timbre est réalisé avec des motifs pour les micro timbres sous la forme de spots pour la réalisation de biopuces, telles que par exemple des biopuces correspondant à des dépôts de matériels comportant de l'acide désoxyribonucléique (ADN) ou des protéines, qui seront analysées au moyen d'un scanner à fluorescence.

Dans un autre exemple d'application, le macro timbre est réalisé avec des motifs pour les micro timbres sous la forme de figures géométriques périodiques, telles que des réseaux, par exemple des réseaux 1 D ou des réseaux 2D, ou de figures géométriques complexes, pour la réalisation de biopuces qui seront analysées au moyen d'un dispositif d'analyse par diffraction.

## Revendications

**1.** Timbre (1) pour le dépôt de matériels sur une surface d'un substrat, lesdits matériels déposés pouvant être identiques ou non, ledit timbre, dit macrotimbre (1), comportant :

- une semelle (12), comportant une première face, dite face inférieure (121),
- des plots (14) solidaires de la semelle (12), chaque plot comportant :

- un axe (143) sensiblement perpendiculaire à la face inférieure (121) de la semelle (12),

- une première extrémité (142) solidaire avec la face inférieure (121) de la semelle (12),
- une seconde extrémité (144), dite extrémité libre, opposée à ladite première extrémité (142) suivant l'axe (143), ladite extrémité libre présentant une face (141), sensiblement plane et parallèle localement à un plan tangent à la face inférieure (121) de la semelle (12), apte à retenir une solution incorporant des matériels à déposer,

lesdits plots étant agencés sur la face inférieure (121) de la semelle (12) de telle sorte que les faces (141) de tous les plots (14) solidaires de la semelle (12) puissent être mis en contact quasi simultanément sur la surface du substrat, **caractérisé en ce que** au moins une face (141) des extrémités libres (144) des plots (14) comporte au moins un motif (13) correspondant au motif sous la forme duquel un matériel doit être déposé sur le substrat, ledit motif (13) étant une surface uniforme, ou spot, un motif géométrique périodique, un motif géométrique complexe apte à diffracter la lumière, ou une combinaison de tels motifs et **en ce que** les plots (14) sont de dimensions millimétriques et le motif (13) sur les plots est de dimension nanométrique.

**2.** Macro timbre suivant la revendication 1 dans lequel un rapport $\dfrac{l}{d}$ est compris entre 1 et 2, de préférence sensiblement égal à 1,5, rapport dans lequel :

- 1 représente une longueur du plot (14), entre la face (121) de la semelle (12) et la face (141) de l'extrémité libre (144) dudit plot,
- **d** représente une dimension caractéristique de la section desdits plots, dans un plan perpendiculaire au sens de la longueur **l**.

**3.** Macro timbre suivant la revendication 1 dans lequel des $\dfrac{d}{p}$ rapports et $\dfrac{d}{q}$ sont compris entre 0,1 et 0,8, rapports dans lequel **p** représente un pas entre les plots (14) suivant une ligne et **q** un pas suivant une colonne.

**4.** Macro timbre suivant l'une des revendications précédentes dans lequel la semelle (12) et les plots (14) sont constitués d'au moins un matériau durcissable.

**5.** Macro timbre suivant la revendication 4 dans lequel un matériau durcissable (5) est un polydiméthylsiloxane (PDMS) ou un polyméthylméthacrylate (PMMA).

**6.** Macro timbre suivant l'une des revendications 4 ou 5 dans lequel au moins un matériau durcissable (5) est un mélange d'au moins deux polymères différents.

**7.** Macro timbre suivant l'une des revendications précédentes dans lequel les plots (14) sont agencés sur la semelle (12) de sorte que chaque plot corresponde à un agencement de puits d'une plaque à puits.

**8.** Procédé de réalisation d'un macro timbre conforme à l'une des revendications 1 à 7, comportant les étapes de :

- positionnement d'un moule (3) sur une face (22) d'une lame (2), ledit moule comportant des évidements traversants (31) reproduisant en dimensions et en agencement une forme en creux correspondant aux dimensions et agencement des plots (14) du macro timbre (1), lesdits évidements (31) débouchant chacun par une ouverture (32) sur une face inférieure (33) du moule (3), ledit positionnement étant réalisé de sorte que ladite face inférieure dudit moule est en contact avec la face (22) de la lame (2),
- remplissage des évidements (31) du moule (3) avec au moins un matériau durcissable (5) constituant après durcissement le macro timbre (1),
- extraction du macro timbre (1) du moule (3).

**9.** Procédé suivant la revendication 8 dans lequel une pression répartie est exercée, suffisante pour éviter un écoulement du au moins un matériau durcissable (5) entre le moule (3) et la lame (2) lors de l'étape de remplissage des emplacements dudit moule.

**10.** Procédé suivant l'une des revendications 8 ou 9 dans lequel au moins un matériau durcissable (5) est coulé sur une face supérieure (35) du moule (3), sur laquelle débouchent les évidements (31), entre des rebords extérieurs (36).

**11.** Procédé suivant l'une des revendications 8 à 10 dans lequel le matériau utilisé pour réaliser le moule (3) est sélectionné dans une famille de matériau à laquelle le au moins un matériau durcissable (5) du macro timbre (1) n'adhère pas.

**12.** Procédé suivant l'une des revendications 8 à 11 dans lequel les évidements (31) du moule (3) sont réalisés avec une forme adaptée au démoulage du au moins un matériau durcissable (5).

**13.** Procédé suivant l'une des revendications 8 à 12 comportant une étape préalable de réalisation de motifs, dits motifs négatifs (21), sur la face (22) de la lame (2), de sorte que les motifs négatifs (21) représentent en négatif des motifs (13) devant être réalisés sur les plots (14) du macro timbre (1).

**14.** Procédé suivant la revendication 13 dans lequel le moule (3) est positionné sur la face (22) de la lame (2) de sorte que chaque ouverture (32) des évidements (31) dudit moule entoure un motif négatif (21).

**15.** Procédé de dépôt quasi simultané de matériels sur une surface d'un substrat au moyen d'un macro timbre (1) conforme à l'une des revendications 1 à 7, lesdits matériels déposés pouvant être identiques ou non, comportant les étapes de :

- dépôt de solutions comportant les différents matériels sur les faces (141) des plots (14) du macro timbre (1),
- séchage partiel des solutions déposées,
- application momentanée du macro timbre (1) sur la surface du substrat de telle sorte que les matériels se déposent quasi simultanément sur la surface du substrat en reproduisant la forme des impressions des faces (141) des différents plots (14).

**16.** Procédé suivant la revendication 15 dans lequel le dépôt des solutions est réalisé par trempage des plots du macro timbre (1) dans des puits (91) d'une plaque à puits (9).

**17.** Procédé suivant la revendication 16 dans lequel un puits (91) de la plaque à puits (9), de profondeur H, est rempli avec un niveau n de remplissage de sorte que $H - l < n < H - l \dfrac{S_{plot}}{S_{puits}}$ , dans lequel :

- $S_{plot}$ détermine une aire du plot,
- $S_{puits}$ détermine une aire du puits.

**18.** Procédé de dépôt de matériels sur une surface d'au moins un substrat dans lequel un même macro timbre (1) est appliqué plusieurs fois suivant le procédé conforme à l'une des revendications 15 à 17.

**Fig. 1**

**Fig. 2**

coupe A-A

**Fig. 3**

**Fig. 4**

**Fig. 5**

**Fig. 6**

Europäisches
Patentamt

European
Patent Office

Office européen
des brevets

**RAPPORT DE RECHERCHE EUROPEENNE**

Numéro de la demande

EP 08 10 5279

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | WO 02/085639 A (UNIV COLUMBIA [US]; ADAMS DAVID [US]; CHERNIAVSKAYA OKSANA [US]) 31 octobre 2002 (2002-10-31) * revendication 1; figures 2A-L * | 1-18 | INV. B01J19/00 B01L3/02 |
| A | WO 02/087769 A (LIFEBITS AG [DE]; BERNARD ANDRE [DE]; DUEBEL STEFAN [DE]) 7 novembre 2002 (2002-11-07) * le document en entier * | 1-18 | |
| A | XIA ET AL: "Soft Lithography" ANGEWANDTE CHEMIE. INTERNATIONAL EDITION, WILEY VCH VERLAG, WEINHEIM, DE, vol. 37, 1998, pages 550-575, XP002149045 ISSN: 1433-7851 * le document en entier * | 1-18 | |
| A | DE 103 32 848 A1 (SUSTECH GMBH & CO KG [DE]) 17 février 2005 (2005-02-17) * le document en entier * | 1-18 | DOMAINES TECHNIQUES RECHERCHES (IPC) |
| A | LIN S C ET AL: "Microsized 2D protein arrays immobilized by micro-stamps and micro-wells for disease diagnosis and drug screening" FRESENIUS JOURNAL OF ANALYTICAL CHEMISTRY, SPRINGER, BERLIN, DE, vol. 371, no. 2, septembre 2001 (2001-09), pages 202-208, XP002306869 ISSN: 0937-0633 * le document en entier * | 1-18 | B01J B01L |
| A | WO 2004/022338 A (IBM [US]; BIETSCH ALEXANDER [CH]; DELAMARCHE EMMANUEL [CH]; MICHEL BRU) 18 mars 2004 (2004-03-18) * le document en entier * | 1-18 | |

-/--

Le présent rapport a été établi pour toutes les revendications

| Lieu de la recherche | Date d'achèvement de la recherche | Examinateur |
|---|---|---|
| Munich | 13 janvier 2009 | Skowronski, Maik |

Europäisches
Patentamt

European
Patent Office

Office européen
des brevets

**RAPPORT DE RECHERCHE EUROPEENNE**

Numéro de la demande

EP 08 10 5279

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | US 5 512 131 A (KUMAR AMIT [US] ET AL) 30 avril 1996 (1996-04-30) * le document en entier * ----- | 1-18 | |
| | | | **DOMAINES TECHNIQUES RECHERCHES (IPC)** |

Le présent rapport a été établi pour toutes les revendications

| Lieu de la recherche | Date d'achèvement de la recherche | Examinateur |
|---|---|---|
| Munich | 13 janvier 2009 | Skowronski, Maik |

CATEGORIE DES DOCUMENTS CITES

X : particulièrement pertinent à lui seul
Y : particulièrement pertinent en combinaison avec un
   autre document de la même catégorie
A : arrière-plan technologique
O : divulgation non-écrite
P : document intercalaire

T : théorie ou principe à la base de l'invention
E : document de brevet antérieur, mais publié à la
   date de dépôt ou après cette date
D : cité dans la demande
L : cité pour d'autres raisons
................................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 08 10 5279

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

13-01-2009

| Document brevet cité au rapport de recherche | | Date de publication | Membre(s) de la famille de brevet(s) | | Date de publication |
|---|---|---|---|---|---|
| WO 02085639 | A | 31-10-2002 | AUCUN | | |
| WO 02087769 | A | 07-11-2002 | AT | 370789 T | 15-09-2007 |
| | | | AU | 2002254994 A1 | 11-11-2002 |
| | | | EP | 1397216 A2 | 17-03-2004 |
| DE 10332848 | A1 | 17-02-2005 | WO | 2005014852 A1 | 17-02-2005 |
| WO 2004022338 | A | 18-03-2004 | AU | 2003256008 A1 | 29-03-2004 |
| | | | CN | 1681581 A | 12-10-2005 |
| | | | DE | 60310443 T2 | 11-10-2007 |
| | | | US | 2006096477 A1 | 11-05-2006 |
| US 5512131 | A | 30-04-1996 | AUCUN | | |

EPO FORM P0460

Pour tout renseignement concernant cette annexe : voir Journal Officiel de l'Office européen des brevets, No.12/82

**RÉFÉRENCES CITÉES DANS LA DESCRIPTION**

**Documents brevets cités dans la description**

- US 5512131 A